# EUROPEAN PATENT APPLICATION

(11) **EP 0 577 240 A1**
(43) Date of publication of application: **05.01.1994**
(21) Application number: 93300277.6
(22) Date of filing: 15.01.1993
(51) Int. Cl.: B62B 7/14, F16B 45/02

(54) **A latching mechanism**

(30) Priority: 01.07.1992 GB 9213986
(71) Applicant: MACLAREN LIMITED, Long Buckby, Northamptonshire NN6 7PF (GB)
(72) Inventor: Church, Graham, Moulton, Northampton NN3 1UX (GB)
(74) Representative: Cooke, William Douglas

(57) **Abstract**

A latching mechanism (6) is described for releasably attaching a carrier (3) such as a carry-cot or pushchair seat to a frame (2).

The latching mechanism (6) comprises a support means (11) attached to carry-cot support member (4). With the latching mechanism in the released position the carry-cot is positioned on frame (2) by positioning lugs (7) and guides (12). Frame member (5) is located in space (13) and hook (14) is rotated about pivot (15) by pushing lever (16) and the hook (14) snaps underneath frame support member (5). A safety latch (18) is pivoted at (19) to hook (14) abutting it against end (20) of support means (11).

To release the latching mechanism, latch lever (21) is pressed forward pivoting safety latch (18) about pivot (19), thus releasing safety latch (18) from abutment end (20), the hook (14) is then released by a reverse pulling action on lever (16).

## Description

This invention relates to a latching mechanism for releasably connecting a carrier to a frame, particularly a carry-cot or seat to a wheeled frame of a pushchair for a child. Such frames are usually foldable for storage and/or ease of transport after the carrier is removed from the frame.

It is often desirable to have the seat of a pushchair facing the pusher of the pushchair or facing in the opposite direction away from the pusher. It is also often required to replace the seat with a carry-cot to form a perambulator.

It is known to provide such wheeled frames with releasable mechanisms which e.g. comprise a simple hook means to latch or unlatch the carry-cot or seat to the frame to faciitate storage or tansportation of the frame. However, these have the disadvantage that they may be inadvertently released, for example, by the hook becoming caught on objects external to the perambulator or pushchair. Alternatively it presents a hazzard in that they may be unintentionally released by a child resulting in danger to the child.

An aim of the present invention is to provide an improved latching mechanism which overcomes the above disadvantage.

According to the present invention there is provided a latching mechanism for releasably attaching a carrier, such as a carry-cot or pushchair seat, to a frame, said mechanism comprising an attaching means which releasably engages a support member of either the carrier or the frame characterised in that, the latching mechanism comprises a safety latch which is releasable by movement of the safety latch relative to the attaching means in a direction different to that required to release the attaching means, such movement being required before the attaching means can be released.

Preferably, the latching means further comprises a support means to which the attaching means is pivotally mounted.

Conveniently, when the attaching means is pressed into the engaged position to attach the frame to the carrier, the safety latch is automatically engaged.

An embodiment of a latching mechanism according to the invention will now be described by way of example only, with reference to the accompanying drawings, in which:
Fig. 1 is a side view of a frame of a conventional pushchair or pram;
Fig. 2 is a side view of a pram formed by the combination of a carry-cot with the frame of Fig. 1, connected with a latching mechanism according to the invention;
Fig. 3 is a side view of a pushchair with the seat attached to the frame of Fig. 1 by a latching mechanism so that it faces away from the user.
Fig. 4 is a similar view to Fig. 3 with the pushchair facing in the opposite direction;
Fig. 5 is a cross-section of the latching mechanism, according to the invention, in the closed position; and
Fig. 6 is a cross-section of the latching mechanism shown in Fig. 5 in the released position.

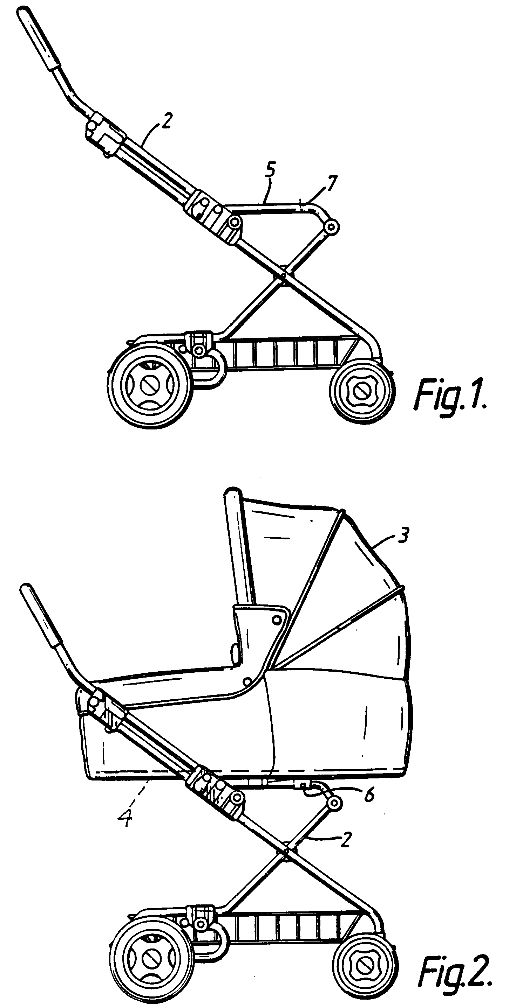

Referring to Fig. 1, a wheeled frame 2 is shown which comprises a pair of frame support members 5 on which are positioned locating lugs 7. Referring to Fig. 2, a carry-cot 3 comprises similar tubular cot support members 4 on which are attached latching mechanisms 6. There are two latching mechanisms 6 on each of the two support members 4. To attach the carry-cot to the frame the support members 4, 5 are aligned with each other and positioned accurately by means of the positioning lugs 7. Once in position the two support members 4, 5 are securely attached to each other by operating the latching mechanism 6.

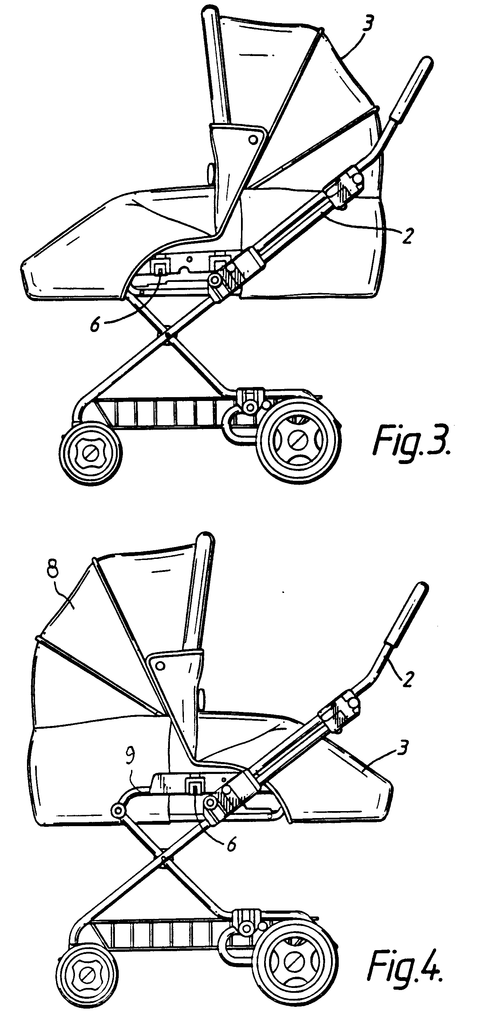

Referring to Fig. 3 and Fig. 4, a pushchair seat 8 comprises a similar pair of tubular support members 9 on each of which are attached a pair of latching mechanism 6. The pushchair seat 8 can thus be removably secured to the frame 2 to form a pushchair in the same way as for the carry-cot. The pushchair may be positioned either facing towards the user as shown in Fig. 4 or away from the user as shown in Fig. 3.

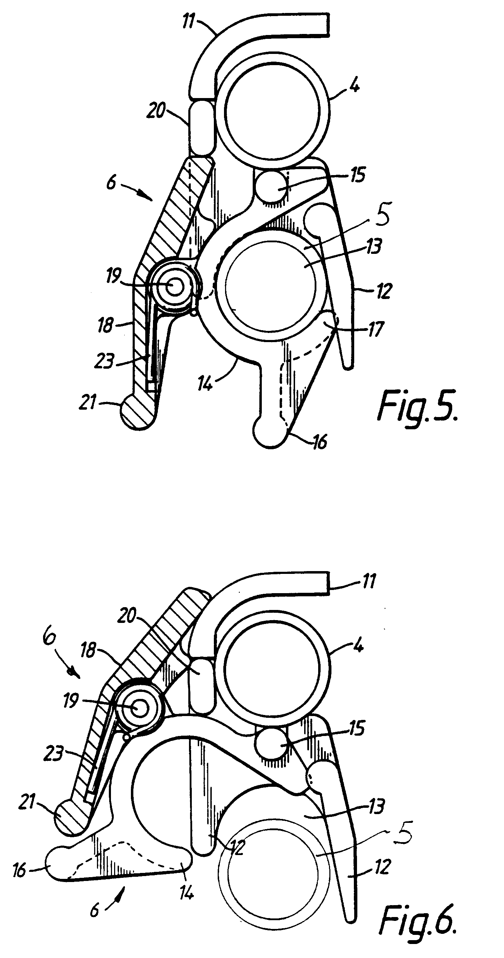

Referring to Figs. 5 and 6, the latching mechanism 6 comprises a support means 11 which is permanently attached to the carry-cot support member 4. With the latching mechanism in the open (released) position, as shown in Fig. 6, the carry-cot is positioned on the frame with the help of the positioning lugs 7 and the guides 12 of the latching mechanism 6, the frame support member 5 being positioned in the space 13. To secure the two support members 4, 5 together, the hook 14 is rotated about a pivot 15 by the operator pushing on the lever 16. The hook 14 snaps in position underneath the frame support member 5 by plastic deformation to the position as shown in Fig. 5.

The safety latch 18 is attached to the hook 14 by means of a pivot 19 and is pulled down with the hook 14 such that it abuts against the end 20 of the support means 11.

It is not possible to release the latching mechanism 6 by merely pulling back the hook 14 because the abutment of the safety latch 18 against the end 20 of the support means 11 prevents any movement of the hook 14. To release the latching mechanism 6 it is necessary first to press forward on the latch lever 21 thus pivoting the safety latch 18 about its pivot 19. This releases the safety latch 18 from its abutment with the end 20 of the support means 11. The hook 14 can then be released by a reverse pulling action on the lever 16. Thus two actions are required in opposite directions to release the latching mechanism. First pushing on the latch lever 21 and secondly pulling on the lever 16. The safety latch 18 is held in the released position while the attaching means is disengaged.

This requirement for two separate actions effectively prevents the unintentional release of the latching mechanism by an adult and the inadvertent release by a child playing with the latching mechanism. This is a much safer mechanism than conventional mechanisms e.g. a simple conventional hook attaching means, which can easily be released by merely pulling back the hook. The latching mechanism of the present invention is particularly effective in this regard due to the first required action being to push the latch lever forward.

Various modifications may be made to the invention, for example, the latching mechanism may be permanently attached to a frame and releasably attached to the carrier, alternatively the latching mechanism may be permanently attached to the carrier and releasably attached to the frame.

It will be understood that the latching mechanism of the present invention may be used to attach a carrier in the form of a bouncer, high chair, baby rocker or baby walker to a respective frame.

## Claims

1. A latching mechanism (6) for releasably attaching a carrier (3) such as a carry-cot or pushchair seat, to a frame (2), said mechanism comprising an attaching means (14) which releasably engages a support member (4, 5) of either the carrier (3) or the frame (2), characterised in that, the mechanism (6) comprises a safety latch (18) which is releasable by movement of the safety latch relative to the attaching means (14) in a direction different to that required to release the attaching means (14), such movement being required before the attaching means (14) can be released.

2. A latching mechanism according to Claim 1, characterised in that the latching means (6) further comprises a support means (11) to which the attaching means (14) is pivotally mounted.

3. A latching mechanism according to Claim 1 or 2, characterised in that, when the attaching means (14) is pressed into the engaged position to attach the frame (2) to the carrier (3), the safety latch (18) is automatically engaged.

4. A latching mechanism according to any of the preceding claims, characterised in that the safety latch (18) is pivotally attached to the attaching means (14).

5. A latching mechanism according to any of the preceding claims, characterised in that the safety latch (18) is releasable by a movement inwardly towards the carrier (3).

6. A latching mechanism according to any of the preceding claims, characterised in that the safety latch (18) is held in the released position while the attaching means (14) is disengaged.

7. A wheeled frame attached to a carrier by a latching mechanism as claimed in any preceding claim.
